# EUROPÄISCHE PATENTANMELDUNG

(11) **EP 2 930 826 A1**
(43) Veröffentlichungstag der Anmeldung: **14.10.2015**
(21) Anmeldenummer: 14163874.2
(22) Anmeldetag: 08.04.2014
(51) Int. Cl.: H02K 5/15, H02K 15/00, H02K 1/18

(54) **Lagerschild für eine gehäuselose elektrische Maschine**

(71) Anmelder: Siemens Aktiengesellschaft, 80333 München (DE)
(72) Erfinder: Scharf, Uwe, 90763 Fürth (DE); Deeg, Christian, 90518 Altdorf (DE); Eichinger, Benjamin, 90459 Nürnberg (DE); Joseph, Eric, 90489 Nürnberg (DE); Scherer, Matthias, 90459 Nürnberg (DE); Stegherr, Michael, 90491 Nürnberg (DE); Weiß, Sebastian, 90522 Oberasbach (DE)

(57) **Zusammenfassung**

Die Erfindung betrifft ein Lagerschild (7) für eine gehäuselose elektrische Maschine (1) mit einem Rotor mit einer Maschinenwelle (5) und einem den Rotor umgebenden Stator (3). Das Lagerschild (7) umfasst ein Plattenlagerschild (9) mit einer Wellenöffnung (11) zur Lagerung der Maschinenwelle (5) und einen lösbar mit dem Plattenlagerschild (9) verbindbaren Lagerschildmantel (13) zur Aufnahme einer Stirnseite des Stators (3).

## Beschreibung

Die Erfindung betrifft ein Lagerschild für eine gehäuselose elektrische Maschine mit einem Rotor und einem den Rotor umgebenden Stator.

Für gehäuselose elektrische Maschinen werden beispielsweise so genannte Topflagerschilde verwendet, die im Wesentlichen die Form eines Topfes, d. h. eines einseitig geschlossenen Hohlkörpers haben und an den Stirnseiten der elektrischen Maschine angeordnet werden. Topflagerschilde können die Funktionen von Stützfüßen zur Drehmomentabstützung, der Lageraufnahme der Maschinenwelle und des Schutzes der elektrischen Maschine im Bereich der Topflagerschilde vereinen. Bei Wartungsarbeiten, bei denen der Rotor aus der Maschine gehoben werden muss, z. B. bei einem Lagerwechsel, muss die Maschine von ihrem Fundament demontiert werden. Die Topflagerschilde mit den Stützfüßen werden entfernt, wobei ein an einem Topflagerschild befestigter Klemmenkasten erforderlichenfalls vorher zu demontieren ist. Erst dann kann der Rotor entfernt werden.

Der Erfindung liegt die Aufgabe zugrunde, ein verbessertes Lagerschild für eine gehäuselose elektrische Maschine anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßes Lagerschild für eine gehäuselose elektrische Maschine mit einem Rotor mit einer Maschinenwelle und einem den Rotor umgebenden Stator umfasst ein Plattenlagerschild mit einer Wellenöffnung zur Lagerung der Maschinenwelle und einen lösbar mit dem Plattenlagerschild verbindbaren Lagerschildmantel zur Aufnahme einer Stirnseite des Stators.

Durch die lösbare Verbindung des Plattenlagerschildes mit dem Lagerschildmantel braucht die eingerichtete Position der elektrischen Maschine bei Wartungsarbeiten, bei denen der Rotor aus der Maschine gehoben werden muss, z. B. bei einem Lagerwechsel, nicht verändert werden und die Lagerschilde müssen nicht komplett entfernt werden. Stattdessen müssen lediglich die Plattenlagerschilde demontiert werden. Die Erfindung vereinfacht damit wesentlich die Wartung gehäuseloser elektrischer Maschinen beispielsweise gegenüber Maschinen mit herkömmlichen Topflagerschilden.

Eine Ausgestaltung der Erfindung sieht vor, dass der Lagerschildmantel im Wesentlichen als ein Hohlzylinder ausgebildet ist und das Plattenlagerschild als ein Boden für den Lagerschildmantel ausgebildet ist.

Dadurch wirkt ein erfindungsgemäßes Lagerschild wie ein Topflagerschild mit einem abnehmbaren Boden, der durch das Plattenlagerschild gebildet wird, und weist die Vorteile eines Topflagerschildes auf, durch das Lagerschild die Lagerung der Maschinenwelle aufzunehmen und die Maschine im Bereich des Lagerschildes, insbesondere im Bereich eines Wickelkopfbereiches des Stators, schützen zu können.

Weitere alternative Ausgestaltungen sehen vor, dass eine Außenoberfläche des Lagerschildmantels im Wesentlichen die Form der Mantelfläche eines Kreiszylinders oder eines Prismas hat.

Die kreiszylindrische Form ist dabei vorteilhaft, wenn auch der Stator der elektrischen Maschine eine im Wesentlichen kreiszylindrische Form hat, während die prismatische Form vorteilhaft ist, wenn auch der Stator der elektrischen Maschine eine im Wesentlichen prismatische Form hat.

Eine weitere Ausgestaltung der Erfindung sieht vor, dass der Lagerschildmantel wenigstens einen Stützfuß zur Abstützung der elektrischen Maschine aufweist.

Dadurch kann der Lagerschildmantel vorteilhaft zur Drehmomentabstützung der elektrischen Maschine verwendet werden.

Eine weitere Ausgestaltung der Erfindung sieht vor, dass der Lagerschildmantel wenigstens eine Klemmenkastenaufnahme zur Befestigung eines Klemmenkastens zur elektrischen Kontaktierung und/oder Energieversorgung der elektrischen Maschine aufweist.

Die Befestigung eines Klemmenkastens an dem Lagerschildmantel (statt z. B. an dem Plattenlagerschild) ist vorteilhaft, da der der Klemmenkasten nicht demontiert werden muss, wenn der Rotor zu Wartungszwecken aus der Maschine gehoben werden muss, z. B. bei einem Lagerwechsel.

Eine weitere Ausgestaltung der Erfindung sieht vor, dass der Lagerschildmantel eine Kabeldurchführung für wenigstens ein Kabel zur Verbindung mit einem Klemmenkasten aufweist.

Dies ermöglicht vorteilhaft die elektrische Verbindung der elektrischen Maschine mit einem externen Klemmenkasten.

Eine weitere Ausgestaltung der Erfindung sieht eine Flanschverbindung zur Verbindung des Plattenlagerschildes und des Lagerschildmantels vor.

Dies ermöglicht vorteilhaft eine einfache und zuverlässige lösbare Verbindung des Plattenlagerschildes und des Lagerschildmantels.

Eine weitere Ausgestaltung der Erfindung sieht vor, dass das Plattenlagerschild und der Lagerschildmantel mittels Schraubverbindungen lösbar verbindbar sind.

Auch diese Ausgestaltung ermöglicht vorteilhaft eine einfache und zuverlässige lösbare Verbindung des Plattenlagerschildes und des Lagerschildmantels.

Eine erfindungsgemäße gehäuselose elektrische Maschine umfasst einen Rotor mit einer Maschinenwelle, einen den Rotor umgebenden Stator und wenigstens ein erfindungsgemäßes Lagerschild. Dabei ist die Maschinenwelle durch die Wellenöffnung des Plattenlagerschildes geführt, eine Stirnseite des Stators ist in dem Lagerschildmantel aufgenommen und mit dem Lagerschildmantel stoffschlüssig, und/oder kraftschlüssig und/oder formschlüssig verbunden, und das Plattenlagerschild ist lösbar mit dem Lagerschildmantel verbunden.

Eine erfindungsgemäße gehäuselose elektrische Maschine weist somit ein erfindungsgemäßes Lagerschild mit den oben genannten Vorteilen auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische Darstellung eines ersten Ausführungsbeispiels einer gehäuselosen elektrischen Maschine, und
- FIG 2: eine perspektivische Darstellung eines zweiten Ausführungsbeispiels einer gehäuselosen elektrischen Maschine.

Einander entsprechende Teile sind in den Figuren mit den gleichen Bezugszeichen versehen.

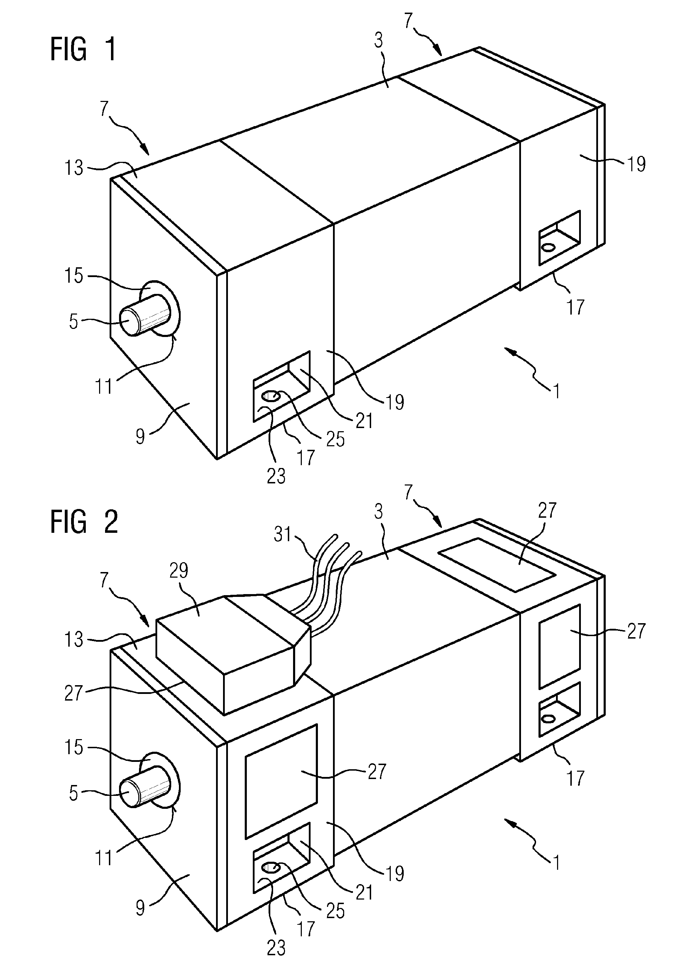

Figur 1 zeigt eine perspektivische Darstellung eines ersten Ausführungsbeispiels einer gehäuselosen elektrischen Maschine 1.

Die elektrische Maschine 1, umfasst einen Rotor mit einer Maschinenwelle 5, einen den Rotor umgebenden Stator 3 und zwei Lagerschilde 7, die an sich gegenüber liegenden Stirnseiten der elektrischen Maschine 1 angeordnet sind.

Jedes Lagerschild 7 umfasst ein Plattenlagerschild 9 mit einer Wellenöffnung 11 zur Lagerung der Maschinenwelle 5 und einen lösbar mit dem Plattenlagerschild 9 verbundenen Lagerschildmantel 13 zur Aufnahme einer Stirnseite des Stators 3, insbesondere in einem Wickelkopfbereich des Stators 3.

Der Lagerschildmantel 13 jedes Lagerschildes 7 ist im Wesentlichen als ein Hohlzylinder mit einer rechteckigen Grundfläche ausgebildet. Das zugehörige Plattenlagerschild 9 ist als eine dazu korrespondierende rechteckige Platte ausgebildet, die einen Boden für den Lagerschildmantel 13 bildet. Jeder Lagerschildmantel 13 ist stoffschlüssig, kraftschlüssig und/oder formschlüssig mit dem Stator 3 verbunden.

Zur Lagerung der Maschinenwelle 5 ist in jeder Wellenöffnung 11 ein Lager 15 angeordnet, durch das die Maschinenwelle 5 geführt ist.

Jeder Lagerschildmantel 13 weist zwei Stützfüße 17 auf, die durch die unteren Kanten der Seitenwände 19 des Lagerschildmantels 13 gebildet werden und der Drehmomentabstützung der elektrischen Maschine 1 dienen. Zur Verankerung der elektrischen Maschine 1 weist jede Seitenwand 19 eine Fußnische 21 mit einem Nischenboden 23 auf, der eine Bodenöffnung 25 für ein Befestigungselement, beispielsweise eine Schraube, zur Befestigung des Lagerschildmantels 13 an einem Fundament aufweist.

Figur 2 zeigt eine perspektivische Darstellung eines zweiten Ausführungsbeispiels einer gehäuselosen elektrischen Maschine 1. Dieses Ausführungsbeispiel unterscheidet sich von dem in Figur 1 dargestellten ersten Ausführungsbeispiel lediglich dadurch, dass jeder Lagerschildmantel 13 an seiner Oberseite und einer Seitenwand 19 jeweils eine Klemmenkastenaufnahme 27 zur Befestigung eines Klemmenkastens 29 zur elektrischen Kontaktierung und/oder Energieversorgung der elektrischen Maschine 1 über elektrische Leitungen 31 aufweist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Lagerschild (7) für eine gehäuselose elektrische Maschine (1) mit einem Rotor mit einer Maschinenwelle (5) und einem den Rotor umgebenden Stator (3), das Lagerschild (7) umfassend
- ein Plattenlagerschild (9) mit einer Wellenöffnung (11) zur Lagerung der Maschinenwelle (5)
- und einen lösbar mit dem Plattenlagerschild (9) verbindbaren Lagerschildmantel (13) zur Aufnahme einer Stirnseite des Stators (3).

2. Lagerschild (7) nach Anspruch 1,
**dadurch gekennzeichnet, dass** der Lagerschildmantel (13) im Wesentlichen als ein Hohlzylinder ausgebildet ist und das Plattenlagerschild (9) als ein Boden für den Lagerschildmantel (13) ausgebildet ist.

3. Lagerschild (7) nach Anspruch 1 oder 2,
**dadurch gekennzeichnet, dass** eine Außenoberfläche des Lagerschildmantels (13) im Wesentlichen die Form der Mantelfläche eines Kreiszylinders hat.

4. Lagerschild (7) nach Anspruch 2,
**dadurch gekennzeichnet, dass** eine Außenoberfläche des Lagerschildmantels (13) im Wesentlichen die Form der Mantelfläche eines Prismas hat.

5. Lagerschild (7) nach einem der vorhergehenden Ansprüche,
**dadurch gekennzeichnet, dass** der Lagerschildmantel (13) wenigstens einen Stützfuß (17) zur Abstützung der elektrischen Maschine (1) aufweist.

6. Lagerschild (7) nach einem der vorhergehenden Ansprüche,
**dadurch gekennzeichnet, dass** der Lagerschildmantel (13) wenigstens eine Klemmenkastenaufnahme (27) zur Befestigung eines Klemmenkastens (29) zur elektrischen Kontaktierung und/oder Energieversorgung der elektrischen Maschine (1) aufweist.

7. Lagerschild (7) nach einem der vorhergehenden Ansprüche,
**dadurch gekennzeichnet, dass** der Lagerschildmantel (13) eine Kabeldurchführung für wenigstens ein Kabel zur Verbindung mit einem Klemmenkasten aufweist.

8. Lagerschild (7) nach einem der vorhergehenden Ansprüche,
**gekennzeichnet durch** eine Flanschverbindung zur Verbindung des Plattenlagerschildes (9) und des Lagerschildmantels (13).

9. Lagerschild (7) nach einem der vorhergehenden Ansprüche,
**dadurch gekennzeichnet, dass** das Plattenlagerschild (9) und der Lagerschildmantel (13) mittels Schraubverbindungen lösbar verbindbar sind.

10. Gehäuselose elektrische Maschine (1), umfassend
- einen Rotor mit einer Maschinenwelle (5),
- einen den Rotor umgebenden Stator (3)
- und wenigstens ein Lagerschild (7) gemäß einem der vorhergehenden Ansprüche,
- wobei die Maschinenwelle (5) durch die Wellenöffnung (11) des Plattenlagerschildes (9) geführt ist,
- eine Stirnseite des Stators (3) in dem Lagerschildmantel (13) aufgenommen und mit dem Lagerschildmantel (13) stoffschlüssig, und/oder kraftschlüssig und/oder formschlüssig verbunden ist,
- und das Plattenlagerschild (9) lösbar mit dem Lagerschildmantel (13) verbunden ist.

## Geänderte Patentansprüche

### Geänderte Patentansprüche gemäss Regel 137(2) EPÜ.

1. Lagerschild (7) für eine gehäuselose elektrische Maschine (1) mit einem Rotor mit einer Maschinenwelle (5) und einem den Rotor umgebenden Stator (3), das Lagerschild (7) umfassend
- ein Plattenlagerschild (9) mit einer Wellenöffnung (11) zur Lagerung der Maschinenwelle (5)
- und einen lösbar mit dem Plattenlagerschild (9) verbindbaren und stoffschlüssig, kraftschlüssig und/oder formschlüssig mit dem Stator (3) verbundenen Lagerschildmantel (13) zur Aufnahme einer Stirnseite des Stators (3),
- wobei der Lagerschildmantel (13) im Wesentlichen als ein Hohlzylinder ausgebildet ist und das Plattenlagerschild (9) als ein Boden für den Lagerschildmantel (13) ausgebildet ist.

2. Lagerschild (7) nach Anspruch 1,
**dadurch gekennzeichnet, dass** eine Außenoberfläche des Lagerschildmantels (13) im Wesentlichen die Form der Mantelfläche eines Kreiszylinders hat.

3. Lagerschild (7) nach Anspruch 1,
**dadurch gekennzeichnet, dass** eine Außenoberfläche des Lagerschildmantels (13) im Wesentlichen die Form der Mantelfläche eines Prismas hat.

4. Lagerschild (7) nach einem der vorhergehenden Ansprüche,
**dadurch gekennzeichnet, dass** der Lagerschildmantel (13) wenigstens einen Stützfuß (17) zur Abstützung der elektrischen Maschine (1) aufweist.

5. Lagerschild (7) nach einem der vorhergehenden Ansprüche,
**dadurch gekennzeichnet, dass** der Lagerschildmantel (13) wenigstens eine Klemmenkastenaufnahme (27) zur Befestigung eines Klemmenkastens (29) zur elektrischen Kontaktierung und/oder Energieversorgung der elektrischen Maschine (1) aufweist.

6. Lagerschild (7) nach einem der vorhergehenden Ansprüche,
**dadurch gekennzeichnet, dass** der Lagerschildmantel (13) eine Kabeldurchführung für wenigstens ein Kabel zur Verbindung mit einem Klemmenkasten aufweist.

7. Lagerschild (7) nach einem der vorhergehenden Ansprüche,
**gekennzeichnet durch** eine Flanschverbindung zur Verbindung des Plattenlagerschildes (9) und des Lagerschildmantels (13).

8. Lagerschild (7) nach einem der vorhergehenden Ansprüche,
**dadurch gekennzeichnet, dass** das Plattenlagerschild (9) und der Lagerschildmantel (13) mittels Schraubverbindungen lösbar verbindbar sind.

9. Gehäuselose elektrische Maschine (1), umfassend
- einen Rotor mit einer Maschinenwelle (5),
- einen den Rotor umgebenden Stator (3)
- und wenigstens ein Lagerschild (7) gemäß einem der vorhergehenden Ansprüche,
- wobei die Maschinenwelle (5) durch die Wellenöffnung (11) des Plattenlagerschildes (9) geführt ist,
- eine Stirnseite des Stators (3) in dem Lagerschildmantel (13) aufgenommen und mit dem Lagerschildmantel (13) stoffschlüssig, und/oder kraftschlüssig und/oder formschlüssig verbunden ist,
- und das Plattenlagerschild (9) lösbar mit dem Lagerschildmantel (13) verbunden ist.
